# EUROPEAN PATENT SPECIFICATION

(11) **EP 2 706 768 B1**
(45) Date of publication and mention of the grant of the patent: **11.04.2018**
(21) Application number: 12800508.9
(22) Date of filing: 02.02.2012
(51) Int. Cl.: H04L 12/14

(54) **USER TRANSFER CONTROL METHOD AND SERVICE CONTROL POINT**
BENUTZERTRANSFERSTEUERVERFAHREN UND DIENSTSTEUERPUNKT
PROCÉDÉ DE COMMANDE DE TRANSFERT D'UTILISATEUR ET POINT DE COMMANDE DE SERVICE

(30) Priority: 15.06.2011 CN 201110160932
(43) Date of publication of application: 12.03.2014
(73) Proprietor: ZTE Corporation, Shenzhen, Guangdong 518057 (CN)
(72) Inventor: LI, Kang, Shenzhen Guangdong 518057 (CN); SHEN, Song, Shenzhen Guangdong 518057 (CN); YU, Ming, Shenzhen Guangdong 518057 (CN)
(74) Representative: Garratt, Peter Douglas
(86) International application number: PCT/CN2012/070853
(87) International publication number: WO 2012/171348

(56) References cited:
- EP-A1- 1 441 314
- WO-A1-03/091918
- WO-A1-2011/016957
- WO-A2-2004/079542
- CN-A- 1 446 003
- CN-A- 101 557 574
- CN-A- 101 692 725
- CN-A- 101 989 213
- US-A- 5 940 813
- US-A1- 2002 133 457
- US-A1- 2003 078 031
- US-A1- 2004 148 263
- US-A1- 2007 156 556

## Description

### TECHNICAL FIELD

The disclosure relates to the field of mobile communications, and in particular to a method for controlling a transfer of a subscriber and a Service Control Point (SCP).

### BACKGROUND

In an existing intelligent network system, interaction of a subscriber with an Online Charge System (OCS) is performed through a Man-Machine Language (MML) interface and a Diameter Credit Control (DCC) interface message, so as to implement the process of signalling control and account operation involved in a call.

Along with rapid development of a communication industry, there are more and more forms of interaction between an OCS and a subscriber. At present, information interaction is generally performed in an overseas market by way of Unstructured Supplementary Service Data (USSD). A USSD service is applicable for a Global System of Mobile communications (GSM) network. The USSD service is easy to operate by providing an informative service in form of a menu type session, and has advantages of good service expansibility, quick providing, practicality, convenience and wide application. A subscriber generally uses USSD to make a prepayment or to perform a transfer operation, which can be done conveniently and swiftly.

In existing techniques, an architecture with separate Control Point (CP) and Data Base (DB) is adopted. By way of load distribution, a Signal Interface Unit (SIU) forwards a call, a USSD request and the like to various CPs in a polling mode for further processing. A flaw of this environment architecture is that the remaining balance of an account can be taken away if a subscriber performs a transfer by sending USSD during a call. In this way, after the call terminates, no amount can be deducted from the account of the subscriber, which brings about a loss to an operator.

WO 2011016957 A1 discloses "a method for account parallel processing used by an account processing centre to process a request for account operation. The method comprises: (1) categorizing accounts as high parallel occurrence accounts and common accounts; (2) when receiving the request from the client for processing operation of an account, firstly determining whether the account is a high parallel occurrence account; and if the account is a high parallel occurrence account, continuing to a step (3), otherwise, conducting a step (4); (3) if the account is locked, queuing a current operation to wait until implementation of the current operation; and (4) further determining, by the account processing centre, whether the account is locked and outputting an error message when the account is locked, otherwise implementing the current operation."

US 2002/133457 A1 discloses "apparatus and methods for billing a packet switched call utilizing a prepaid account in which a prepaid packet note (PPN) monitors a subscriber's usage during the call. The PPN is logically associated with a wireless packet serving node (WPSN) that executes call processing that is associated with the call. Moreover, also provides apparatus and method for enabling the subscriber to replenish the subscriber's prepaid account through a signal processor such as a website or a telephone processing unit."

CN101692725A discloses a method for implementing call charge transfer between terminals, the method comprises: transmitting a call transfer request to the network side through the first terminal, the call transfer request at least carries the amount of the call fee to be transferred and the number information of the second terminal to be transferred to the amount of the call fee; after receiving the request, the network side determines that the amount of the call fee to be transferred does not exceed the balance in the account of the first terminal, subtracting the amount of the call fee to be transferred from the account of the first terminal, and adding the amount of the call fee to be transferred to the account of the second terminal.

### SUMMARY

A technical problem to be solved by the disclosure is to provide a method for controlling a transfer of a subscriber and an SCP, so as to prohibit performing a transfer operation on a balance of an account of the subscriber during a call of the subscriber.

In order to solve the aforementioned technical problem, a technical solution provided by an embodiment of the disclosure is as follows.

One the one hand, a method for controlling a transfer of a subscriber is provided, which includes:
an SCP receives a transfer request message from a subscriber; after the transfer request message is received by the SCP, the SCP determines a status of the subscriber, and generates a result of the determination; when the result of the determination is that the subscriber is in a call, the SCP performs no transfer; and when the result of the determination is that the subscriber is not in a call, the SCP performs a transfer on a balance of a pre-paid account of the subscriber according to the transfer request message;
the step that the SCP determines a status of the subscriber and generates a result of the determination after the transfer request message is received by the SCP may specifically include:
after the transfer request message is received by the SCP, the SCP acquires a first current time;
the SCP acquires a record time corresponding to the subscriber, wherein the record time is a time when the subscriber completes a last call or a time when a next charging is performed on the pre-paid account of the subscriber; and
the SCP compares the first current time with the record time corresponding to the subscriber, and generates a result of the determination, wherein
when the first current time is earlier than the record time, the generated result of the determination is that the subscriber is in a call; and when the first current time is no earlier than the record time, the generated result of the determination is that the subscriber is not in a call;
wherein the subscriber may be a calling subscriber or a called subscriber; and
the record time may be generated according to steps of:
   the SCP receives a call request of a calling subscriber to call a called subscriber;
   the SCP sends a first Apply Charging (AC) message to a Mobile Switching Center (MSC) according to the call request, and acquires a second current time;
   the SCP generates the record time by adding a first predetermined duration to the second current time;
   the SCP determines whether the call is still in progress;
   when it is determined that the call is ended, the SCP updates the record time with a time when the call completes;
   when it is determined that the call is still in progress, the SCP sends a second AC message to the MSC when a second predetermined duration expires starting from the time when the first AC message is sent, and acquires a third current time; and the SCP updates the record time with a sum of the third current time and the first predetermined duration; and
   the SCP uses the record time as a record time of the calling subscriber or a record time of the called subscriber respectively.

The method may further include: while the SCP performs no transfer,
the transfer request message is stored; and after the call completes, a transfer is performed on the balance of the pre-paid account of the subscriber according to the transfer request message.

The method may further include: before the SCP sends the first AC message to the MSC according to the call request,
the SCP determines whether the calling subscriber is a pre-paid service subscriber, and determines whether the called subscriber is a pre-paid service subscriber.

The first predetermined duration may be equal to the second predetermined duration.

On the other hand, an SCP is provided, which includes:
a receiving unit configured to receive a transfer request message from a subscriber;
a determining unit configured to: after the transfer request message is received, determine a status of the subscriber, and generate a result of the determination; and
a first transferring unit configured to: when the result of the determination is that the subscriber is not in a call, perform a transfer on a balance of a pre-paid account of the subscriber according to the transfer request message; and when the result of the determination is that the subscriber is in a call, perform no transfer;
the determining unit may include:
   a first acquiring sub-unit configured to: after the transfer request message is received, acquire a first current time;
   a second acquiring sub-unit configured to: acquire a record time corresponding to the subscriber, wherein the record time is a time when the subscriber completes a last call or a time when a next charging is performed on the pre-paid account of the subscriber; and
   a comparing sub-unit configured to: compare the first current time with the record time corresponding to the subscriber, and generate the result of the determination, wherein when the first current time is earlier than the record time, the generated result of the determination is that the subscriber is in a call, and when the first current time is no earlier than the record time, the generated result of the determination is that the subscriber is not in a call;
   wherein the subscriber may be a calling subscriber or a called subscriber; and
   the second acquiring sub-unit may include:
      a receiving module configured to receive a call request of a calling subscriber to call a called subscriber;
      a sending module configured to: send a first AC message to an MSC according to the call request, and acquire a second current time;
      a generating module configured to: generate the record time by adding a first predetermined duration to the second current time;
      a determining module configured to determine whether the call is still in progress;
      a first updating module configured to: when the determining module determines that the call is still in progress, send a second AC message to the MSC when a second predetermined duration expires starting from the time when the first AC message is sent, and acquire a third current time; and update the record time with a sum of the third current time and the first predetermined duration; and
      a second updating module configured to: when the determining module determines that the call is ended, update the record time with a time when the call completes.

The SCP may further include:
a storing unit configured to store the transfer request message; and
a second transferring unit configured to: after the call completes, perform a transfer on the balance of the pre-paid account of the subscriber according to the transfer request message.

Embodiments of the disclosure have the following beneficial effects.

In the above solution, an SCP receives a transfer request message from a subscriber; after the transfer request message is received by the SCP, the SCP determines a status of the subscriber, and generates a result of the determination; when the result of the determination is that the subscriber is in a call, the SCP performs no transfer; and when the result of the determination is that the subscriber is not in a call, the SCP performs a transfer on a balance of a pre-paid account of the subscriber according to the transfer request message. Therefore, a transfer from a balance of an account of a subscriber is prohibited during a call of the subscriber, so that a loss of an operator can be avoided.

### BRIEF DESCRIPTION OF THE DRAWINGS

Fig. 1 is a schematic flowchart of a first embodiment of a method for controlling a transfer of a subscriber according to the disclosure;
Fig. 2 is a schematic flowchart of a second embodiment of a method for controlling a transfer of a subscriber according to the disclosure;
Fig. 3 is a schematic flowchart of generating a record time in the embodiment shown in Fig. 2;
Fig. 4 is a schematic connection diagram of a structure of an SCP according to the disclosure;
Fig. 5 is a schematic diagram of a service flow of setting concurrency control during a call according to the disclosure; and
Fig. 6 is a schematic diagram of a service flow of prohibiting a transfer using USSD according to the disclosure.

### DETAILED DESCRIPTION

In order to make a technical problem to be solved by an embodiment of the disclosure, and a technical solution and advantages thereof clearer and easier to understand, the disclosure is further elaborated below with reference to the drawings and specific embodiments.

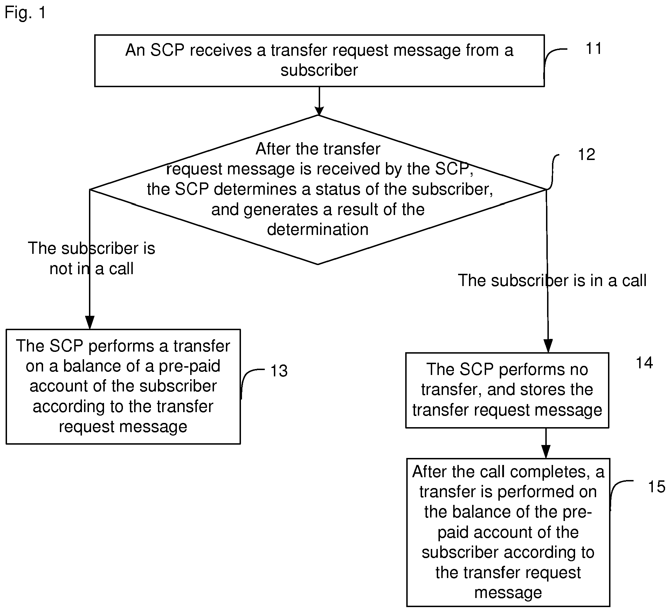

As shown in Fig. 1, a method for controlling a transfer of a subscriber according to the disclosure includes:
Step 11: An SCP receives a transfer request message from a subscriber.
Step 12: After the transfer request message is received by the SCP, the SCP determines a status of the subscriber, and generates a result of the determination.
Step 13: When the result of the determination is that the subscriber is not in a call, the SCP performs a transfer on a balance of a pre-paid account of the subscriber according to the transfer request message.
Step 14: When the result of the determination is that the subscriber is in a call, the SCP performs no transfer.

Optionally, while Step 14 is executed, the method further includes: storing the transfer request message.

Step 15: After the call completes, a transfer is performed on the balance of the pre-paid account of the subscriber according to the transfer request message.

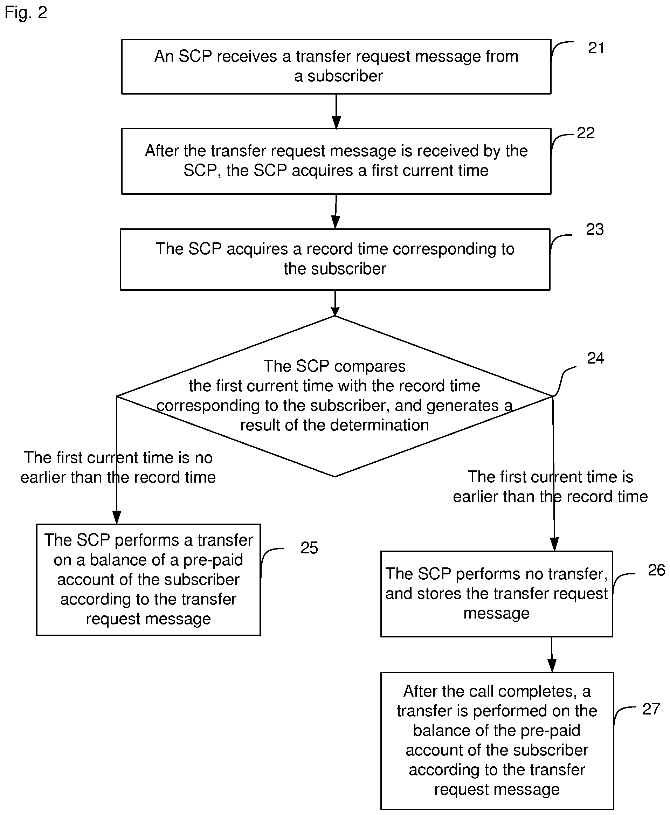

As shown in Fig. 2, a method for controlling a transfer of a subscriber according to the disclosure includes:
Step 21: An SCP receives a transfer request message from a subscriber.
Step 22: After the transfer request message is received by the SCP, the SCP acquires a first current time. For example, the SCP acquires a first current time that the transfer request message is received, such as five past nine, February 10, 2011.
Step 23: The SCP acquires a record time corresponding to the subscriber, wherein the record time is a time when the subscriber completes a last call or a time when a next charging is performed on the pre-paid account of the subscriber.
Step 24: The SCP compares the first current time with the record time corresponding to the subscriber, and generates a result of the determination.
Step 25: If the first current time is no earlier than the record time, the generated result of the determination is that the subscriber is not in a call. Then, the SCP performs a transfer on a balance of a pre-paid account of the subscriber according to the transfer request message. For example, if the first current time is five past nine, February 10, 2011 and the record time is one past nine, February 10, 2011, then it means that the subscriber is not in a call, and the subscriber is allowed to perform a transfer.
Step 26: If the first current time is earlier than the record time, the generated result of the determination is that the subscriber is in a call. For example, if the first current time is five past nine, February 10, 2011 and the record time is ten past nine, February 10, 2011, then it is indicated that the subscriber is on a call status, and the subscriber is not allowed to perform a transfer.

While Step 26 is executed, the method further includes: storing the transfer request message.

Step 27: After the call completes, a transfer is performed on the balance of the pre-paid account of the subscriber according to the transfer request message.

Wherein the subscriber is a calling subscriber or a called subscriber; and
the record time is generated according to the following steps:
Step 231: The SCP receives a call request of a calling subscriber to call a called subscriber;
Step 232: The SCP sends a first AC message to an MSC according to the call request, and acquires a second current time. For example, the SCP acquires the first current time of sending the first AC message, such as thirty past eight, February 10, 2011.
Step 233: The SCP generates the record time by adding a first predetermined duration to the second current time. The SCP uses the record time as a record time of the calling subscriber or a record time of the called subscriber respectively. For example, if the first predetermined duration is 15 minutes, the record time is a quarter to nine, February 10, 2011. Then, in a duration from twenty to nine, February 10, 2011 to a quarter to nine, February 10, 2011, if the subscriber does not complete the call, the subscriber is not allowed to perform a transfer operation.
Step 234: The SCP determines whether the call is still in progress.
Step 235: When it is determined that the call is still in progress, the SCP sends a second AC message to the MSC when a second predetermined duration expires starting from the time when the first AC message is sent, and acquires a third current time; and the SCP updates the record time with a sum of the third current time and the first predetermined duration. For example, if the first current time of sending the first AC message is thirty past eight, February 10, 2011 and the second predetermined duration is assumed to be 15 minutes, then at a quarter to nine, February 10, 2011 it is determined whether the call is still in progress. If it is determined that the call is still in progress, the record time is updated as nine o'clock, February 10, 2011. Then before nine o'clock, February 10, 2011, if the use does not yet complete the call, the subscriber is not allowed to perform a transfer operation.
Step 236: When it is determined that the call is ended, the SCP updates the record time with a time when the call completes. For example, assume that the second predetermined duration is 15 minutes, then at a quarter to nine, February 10, 2011 it is determined that the call has completed. If the time when the call completes is twenty to nine, February 10, 2011, the record time is updated as twenty to nine, February 10, 2011. After twenty to nine, February 10, 2011, if the use does not make a new call, the subscriber is allowed to perform a transfer.

Optionally, before Step 232, the method further includes:
the SCP determines whether the calling subscriber is a pre-paid service subscriber, and determines whether the called subscriber is a pre-paid service subscriber.

If the calling subscriber is a pre-paid service subscriber, then in a subsequent step, a corresponding record time is generated for the calling subscriber; otherwise, no corresponding record time needs to be generated for the calling subscriber. Likewise, if the called subscriber is a pre-paid service subscriber, in a subsequent step, a corresponding record time is generated for the called subscriber; otherwise, no corresponding record time needs to be generated for the called subscriber.

Wherein, the first predetermined duration is equal to the second predetermined duration. Thus, it is further ensured that no transfer can be performed during a subscriber call. Furthermore, after the subscriber completes the call, the subscriber can use a transfer function in time.

The first current time and the record time include information about a date, or include information about only a date of a month. In this way, detailed time information of a subscriber operation can be recorded.

In the aforementioned embodiment, the record time of the subscriber is updated continuously. Assume that the first predetermined duration is 15 minutes and the time of sending a first AC message is thirty past eight, February 10, 2011, i.e., the time when a call starts, then the record time is a quarter to nine, February 10, 2011.

Assume that the subscriber completes the call at twenty to nine, February 10, 2011, then the record time is updated as twenty to nine, February 10, 2011.

Assume that the subscriber completes the call at twenty to nine, Feb. 10, 2011, then the record time is updated as twenty to nine, Feb. 10, 2011.

Assume that the subscriber does not yet complete the call at a quarter to nine, February 10, 2011, then a second AC message is sent to the MSC, and the record time is updated as nine o'clock, February 10, 2011.

Assume that the subscriber completes the call at ten to nine, February 10, 2011, then the record time is updated as ten to nine, February 10, 2011.

Assume that the subscriber does not yet complete the call at nine o'clock, February 10, 2011, then a third AC message is sent to the MSC, and the record time is updated as fifteen past nine, February 10, 2011. The process of sending the AC message and updating the record time is performed by analogy.

In the aforementioned embodiment, the record time can be stored in a database table of a database server, and can be applicable for a CP and DB separated structure.

In the aforementioned embodiment, it can be determined whether a subscriber is in a call by interaction of an SCP with another network element.

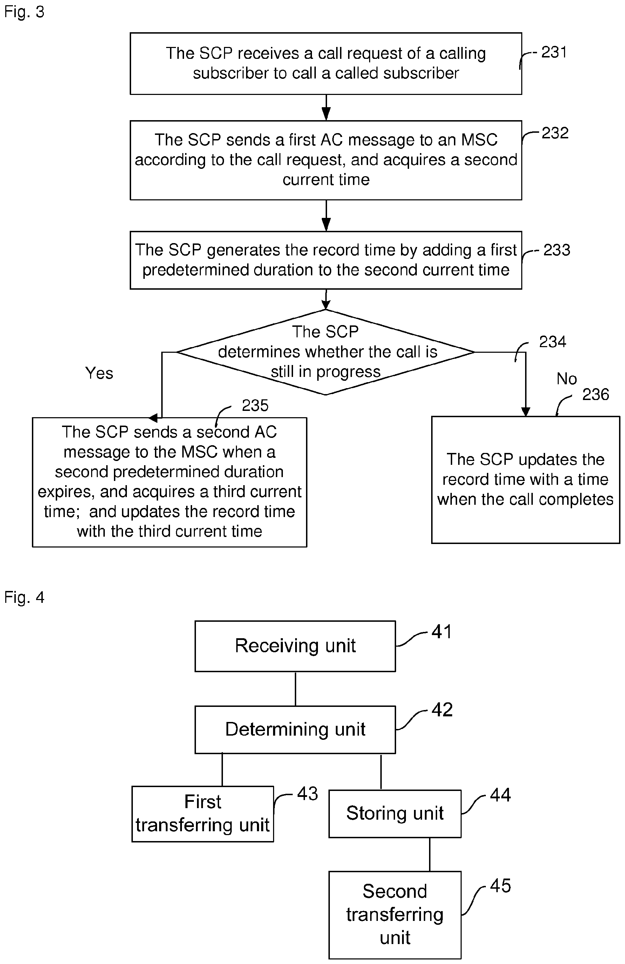

As shown in Fig. 4, an SCP according to the disclosure includes:
a receiving unit 41 configured to receive a transfer request message from a subscriber;
a determining unit 42 configured to: after the transfer request message is received, determine a status of the subscriber, and generate a result of the determination; and
a first transferring unit 43 configured to: when the result of the determination is that the subscriber is not in a call, perform a transfer on a balance of a pre-paid account of the subscriber according to the transfer request message; and when the result of the determination is that the subscriber is in a call, perform no transfer.

The SCP further includes:
a storing unit 44 configured to store the transfer request message; and
a second transferring unit 45 configured to: after a call completes, perform a transfer on the balance of the pre-paid account of the subscriber according to the transfer request message.

The determining unit 42 includes:
a first acquiring sub-unit configured to: after the transfer request message is received, acquire a first current time;
a second acquiring sub-unit configured to: acquire a record time corresponding to the subscriber, wherein the record time is a time when the subscriber completes a last call or a time when a next charging is performed on the pre-paid account of the subscriber; and
a comparing sub-unit configured to: compare the first current time with the record time corresponding to the subscriber, and generate a result of the determination, wherein when the first current time is earlier than the record time, the generated result of the determination is that the subscriber is in a call, and when the first current time is no earlier than the record time, the generated result of the determination is that the subscriber is not in a call.
The subscriber is a calling subscriber or a called subscriber; and
the second acquiring sub-unit includes:
   a receiving module configured to receive a call request of a calling subscriber to call a called subscriber;
   a sending module configured to send a first AC message to an MSC according to the call request, and acquire a second current time;
   a generating module configured to: generate the record time by adding a first predetermined duration to the second current time;
   a determining module configured to determine whether the call is still in progress;
   a first updating module configured to: when the determining module determines that the call is still in progress, send a second AC message to the MSC when a second predetermined duration expires starting from the time when the first AC message is sent, and acquire a third current time; and update the record time with a sum of the third current time and the first predetermined duration; and
   a second updating module configured to: when the determining module determines that the call is ended, update the record time with a time when the call completes.

The disclosure provides a method and system for prohibiting a transfer using USSD during a call, in which a transfer of a subscriber of a pre-paid service using USSD is prohibited during a call of the subscriber. By setting an intelligent network service function, a subscriber is prohibited to perform a transfer using USSD during a subscriber call, so as to avoid effectively a loss of an operator while allowing the subscriber to perform a transfer using USSD normally when the subscriber is not making a call. During a subscriber call, a transfer using USSD is not allowed without affecting another service, and it is ensured that after the subscriber call completes, charging can be performed correctly and a spent expense can be deducted from an account. In addition, a subscriber can perform a transfer normally when not making a call.

The method mainly includes the following steps:
Step A: Both subscriber a and subscriber b are pre-paid service subscribers of an intelligent network, a switching side of a core network forwards a request of subscriber a to call subscriber b to an intelligent network platform, sends information related to the call and triggers a service related to the intelligent network.
Step B: When the call is initiated, an SCP records a recorded time in a database table, wherein the recorded time is a time when the call between subscribers a and b starts plus a set duration of an AC call, which responds to a flag bit of a subscriber call.
Step C: During the call, before a second AC and an AC issued subsequently, the recorded time in the database table is updated specifically as a current time plus a set duration of an AC call.
Step D: During the call, when subscriber a initiates a transfer using USSD request, the SCP determines a current flag bit of subscriber a in the database table, and determines that the current time is less than the record time in the database table, therefore the transfer fails. Similarly, when subscriber b initiates a transfer using USSD request, the transfer will also fail.
Step E: after the call completes, a subscriber record in the database table is updated specifically as the current time.
Step F: after the call completes, when subscriber a initiates a transfer using USSD request, the SCP determines a current flag bit of subscriber a in the database table, and determines that the current time is greater than the record time in the database table, therefore the transfer succeeds. Similarly, when subscriber b initiates a transfer using USSD request, the transfer also succeeds.

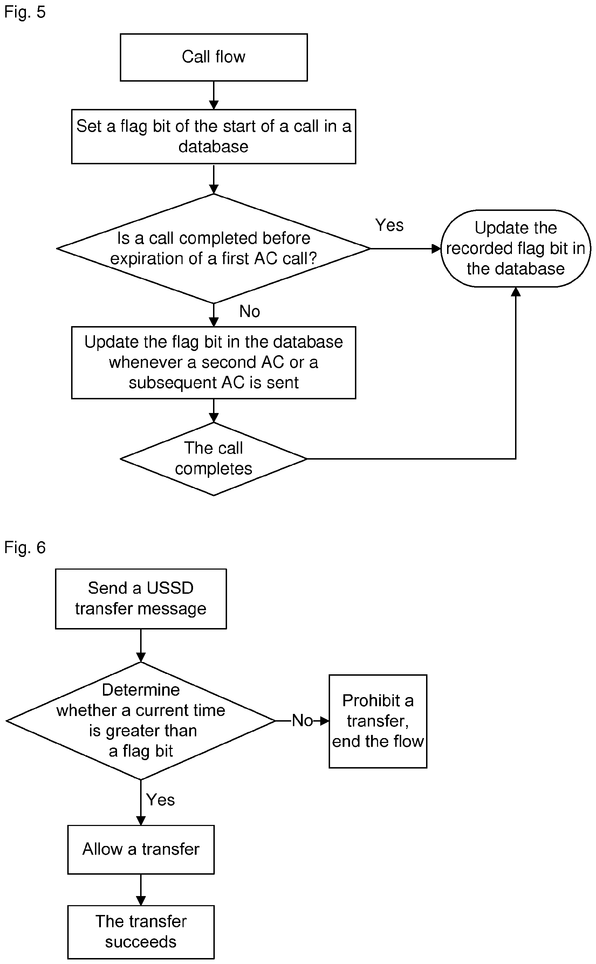

Fig. 5 shows a service flow of setting concurrency control in a call in a scenario of applying the disclosure. The specific flow is as follows:
a) An SCP related to an intelligent network receives call flow information from an MSC of a core network, analyzes a calling number and a called number, and determines whether a call requirement is satisfied.
b) If the call requirement is satisfied, the SCP sets a flag bit of the start of a call for a subscriber who is about to make the call (including a calling subscriber and a called subscriber) in a database table, wherein the flag bit is the current time of the start of a call plus a duration of an AC (Apply Charging) set in a system, which duration is also an interval at which an AC message is sent. The duration can be set according to an actual condition of a call area. After the flag bit is set, the call flow continues.
c) If the call completes before the duration of a first AC call expires, the SCP updates the flag bit of a subscriber in the database table as the time the call completes.
d) If the call of a subscriber continues, then each time the SCP sends a second or a subsequent AC to the MSC, the SCP will update the flag bit of a subscriber in the database table as the current time plus the duration of an AC set in the system.
e) Likewise, if a subscriber ends the call after several ACs, the SCP updates the flag bit of a subscriber in the database table as the time when the call completes.

As shown in Fig. 6, a service flow of prohibiting a transfer using USSD in a scenario of applying the disclosure includes that:
a) A subscriber sends a transfer request using USSD, and an MSC forwards the transfer request to an SCP via a Home Location Register (HLR).
b) The SCP determines whether a current time is greater than a flag bit of the subscriber in a database table.
c) If the current time is less than the flag bit of the subscriber in the database table, then the subscriber is not allowed to perform a transfer using USSD, and a failure message is returned to the subscriber.
d) If the current time is greater than the flag bit of the subscriber in the database table, the subscriber is allowed to perform a transfer using USSD, and the SCP performs a subsequent transfer.

Compared with the prior art, the disclosure introduces a processing mechanism that is safe, quick, efficient, and low-cost, which prohibits a transfer using USSD during a call without affecting a normal process of the call. Furthermore, after a call completes, a transfer using USSD can also be performed normally. In this way, on one hand, it is ensured that an Online Charge System (OCS) performs a normal charging operation and deducts a normal expense, thereby reducing a loss of an operator. On the other hand, it is also ensured that a USSD transfer function can be used normally when no call is made.

Those skilled in the art can understand that all or part of steps of the method of the aforementioned embodiments can be implemented by instructing a related hardware through a program. The program can be stored in a computer readable storage medium. When executed, the program includes the steps of the method of the aforementioned embodiments; and the storage medium includes for example a diskette, an optical disk, a Read-Only Memory (ROM) or a Random Access Memory (RAM).

In various method embodiments of the disclosure, the serial numbers of various steps are not intended to define a temporal order in which these steps are executed. Any change in the order of executing various steps made by those skilled in the art without paying any creative labour shall fall within the scope of protection of the disclosure.

### Industrial applicability

The disclosure can prohibit a transfer from a balance of a subscriber account during a call of the subscriber, so that a loss of an operator is avoided.

## Claims

1. A method for controlling a transfer of a subscriber, comprising:
receiving, by a Service Control Point SCP, a transfer request message from a subscriber (S11);
after the transfer request message is received by the SCP, determining, by the SCP, a status of the subscriber, and generating a result of the determination (S12);
when the result of the determination is that the subscriber is in a call, performing, by the SCP, no transfer; and
when the result of the determination is that the subscriber is not in a call, performing, by the SCP, a transfer on a balance of a pre-paid account of the subscriber according to the transfer request message (S13);
**characterized in that**: wherein the determining, by the SCP, a status of the subscriber and generating a result of the determination after the transfer request message is received by the SCP comprises:
after the transfer request message is received by the SCP, acquiring, by the SCP, a first current time (S22);
acquiring, by the SCP, a record time corresponding to the subscriber (S23), wherein the record time is a time when the subscriber completes a last call or a time when a next charging is performed on the pre-paid account of the subscriber; and
comparing, by the SCP, the first current time with the record time corresponding to the subscriber, and generating a result of the determination (S24), wherein
when the first current time is earlier than the record time, the generated result of the determination is that the subscriber is in a call (S26 and S27); and when the first current time is no earlier than the record time, the generated result of the determination is that the subscriber is not in a call (S25);
wherein the subscriber is a calling subscriber or a called subscriber; and
the record time is generated according to steps of:
receiving, by the SCP, a call request of a calling subscriber to call a called subscriber (S231);
sending, by the SCP, a first Apply Charging, AC, message to a Mobile Switching Center ,MSC, according to the call request, and acquiring a second current time (S232);
generating, by the SCP, the record time by adding a first predetermined duration to the second current time (S233);
determining, by the SCP, whether the call is still in progress (S234);
when it is determined that the call is ended, updating, by the SCP, the record time with a time when the call completes (S236);
when it is determined that the call is still in progress, sending, by the SCP, a second AC message to the MSC when a second predetermined duration expires starting from the time when the first AC message is sent, and acquiring a third current time; and updating the record time with a sum of the third current time and the first predetermined duration (S235); and
using, by the SCP, the record time as a record time of the calling subscriber or a record time of the called subscriber respectively.

2. The method according to claim 1, further comprising: while the SCP performs no transfer;
storing the transfer request message (S14); and after the call completes, performing a transfer on the balance of the pre-paid account of the subscriber according to the transfer request message (S15).

3. The method according to claim 1, further comprising: before the SCP sends the first AC message to the MSC according to the call request,
determining, by the SCP, whether the calling subscriber is a pre-paid service subscriber, and determining whether the called subscriber is a pre-paid service subscriber.

4. The method according to claim 1, wherein the first predetermined duration is equal to the second predetermined duration.

5. A Service Control Point ,SCP, comprising:
a receiving unit (41) configured to receive a transfer request message from a subscriber;
a determining unit (42) configured to: after the transfer request message is received, determine a status of the subscriber, and generate a result of the determination; and
a first transferring unit (43) configured to: when the result of the determination is that the subscriber is not in a call, perform a transfer on a balance of a pre-paid account of the subscriber according to the transfer request message; and when the result of the determination is that the subscriber is in a call, perform no transfer;
**characterized in that** the determining unit (41) comprises:
a first acquiring sub-unit configured to: after the transfer request message is received, acquire a first current time;
a second acquiring sub-unit configured to: acquire a record time corresponding to the subscriber, wherein the record time is a time when the subscriber completes a last call or a time when a next charging is performed on the pre-paid account of the subscriber; and
a comparing sub-unit configured to: compare the first current time with the record time corresponding to the subscriber, and generate a result of the determination, wherein when the first current time is earlier than the record time, the generated result of the determination is that the subscriber is in a call, and when the first current time is no earlier than the record time, the generated result of the determination is that the subscriber is not in a call;
wherein the subscriber is a calling subscriber or a called subscriber; and
the second acquiring sub-unit comprises:
a receiving module configured to receive a call request of a calling subscriber to call a called subscriber;
a sending module configured to: send a first Apply Charging ,AC, message to a Mobile Switching Center, MSC, according to the call request, and acquire a second current time;
a generating module configured to: generate the record time by adding a first predetermined duration to the second current time;
a determining module configured to determine whether the call is still in progress;
a first updating module configured to: when the determining module determines that the call is still in progress, send a second AC message to the MSC when a second predetermined duration expires starting from the time when the first AC message is sent, and acquire a third current time; and update the record time with a sum of the third current time and the first predetermined duration; and
a second updating module configured to: when the determining module determines that the call is ended, update the record time with a time when the call completes.

6. The SCP according to claim 5, further comprising:
a storing unit (44) configured to store the transfer request message; and
a second transferring unit (45) configured to: after the call completes, perform a transfer on the balance of the pre-paid account of the subscriber according to the transfer request message.

## Patentansprüche

1. Verfahren zum Steuern einer Übertragung eines Teilnehmers, umfassend das Empfangen einer Übertragungsanforderungsnachricht von einem Teilnehmer durch einen Dienstkontrollpunkt (Service Control Point, SCP) (S11) ;
nachdem die Übertragungsanforderungsnachricht von dem SCP empfangen wurde, Bestimmen eines Status des Teilnehmers durch den SCP und Erzeugen eines Ergebnisses der Bestimmung (S12);
wenn das Ergebnis der Bestimmung darin besteht, dass sich der Teilnehmer in einem Anruf befindet, Durchführen keiner Übertragung durch den SCP; und
wenn das Ergebnis der Bestimmung darin besteht, dass sich der Teilnehmer nicht in einem Anruf befindet, Durchführen einer Übertragung auf einem Guthaben eines vorausbezahlten Kontos des Teilnehmers durch den SCP gemäß der Übertragungsanforderungsnachricht (S13);
**gekennzeichnet durch** Folgendes: wobei das Bestimmen eines Status des Teilnehmers durch den SCP und das Erzeugen eines Ergebnisses der Bestimmung, nachdem die Übertragungsanforderungsnachricht von dem SCP empfangen wurde, Folgendes umfasst:
nachdem die Übertragungsanforderungsnachricht von dem SCP empfangen wurde, Erfassen einer ersten aktuellen Zeit durch den SCP (S22);
Erfassen einer Aufzeichnungszeit, die dem Teilnehmer entspricht, durch den SCP (S23), wobei die Aufzeichnungszeit eine Zeit ist, zu der der Teilnehmer einen letzten Anruf abschließt, oder eine Zeit, zu der ein nächstes Laden auf dem vorausbezahlten Konto des Teilnehmers durchgeführt wird; und
Vergleichen, durch den SCP, der ersten aktuellen Zeit mit der Aufzeichnungszeit, die dem Teilnehmer entspricht, und Erzeugen eines Ergebnisses der Bestimmung (S24), wobei
wenn die erste aktuelle Zeit früher als die Aufzeichnungszeit ist, ist das erzeugte Ergebnis der Bestimmung, dass sich der Teilnehmer in einem Anruf befindet (S26 und S27); und wenn die erste aktuelle Zeit nicht früher als die Aufzeichnungszeit ist, ist das erzeugte Ergebnis der Bestimmung, dass sich der Teilnehmer nicht in einem Anruf befindet (S25);
wobei der Teilnehmer ein anrufender Teilnehmer oder ein angerufener Teilnehmer ist; und
die Aufzeichnungszeit gemäß den folgenden Schritten erzeugt wird:
Empfangen, durch den SCP, einer Anrufanforderung eines anrufenden Teilnehmers, einen angerufenen Teilnehmer anzurufen (S231);
Senden, durch den SCP, einer ersten Ladevorgang-Ausführen- (Apply Charging, AC) Nachricht an ein Mobilvermittlungszentrum (Mobile Switching Center, MSC) gemäß der Anrufanforderung und Erfassen einer zweiten aktuellen Zeit (S232);
Erzeugen, durch den SCP, der Aufzeichnungszeit durch Hinzufügen einer ersten vorbestimmten Dauer zu der zweiten aktuellen Zeit (S233);
Bestimmen, durch den SCP, ob der Anruf noch in Bearbeitung ist (S234);
wenn bestimmt wird, dass der Anruf beendet ist, Aktualisieren, durch den SCP, der Aufzeichnungszeit mit einer Zeit, zu der der Anruf abgeschlossen wird (S236);
wenn festgestellt wird, dass der Anruf noch Bearbeitung ist, Senden, durch den SCP, einer zweiten AC-Nachricht an das MSC, wenn eine zweite vorbestimmte Dauer ab dem Zeitpunkt abläuft, zu dem die erste AC-Nachricht gesendet wird, und Erfassen einer dritten aktuellen Zeit; und Aktualisieren der Aufzeichnungszeit mit einer Summe der dritten aktuellen Zeit und der ersten vorbestimmten Dauer (S235); und
Verwenden, durch den SCP, der Aufzeichnungszeit als eine Aufzeichnungszeit des anrufenden Teilnehmers bzw. einer Aufzeichnungszeit des angerufenen Teilnehmers.

2. Verfahren nach Anspruch 1, ferner umfassend:
während der SCP keine Übertragung durchführt;
Speichern der Übertragungsanforderungsnachricht (S14);
und nachdem der Anruf abgeschlossen ist, Durchführen einer Übertragung auf dem Guthaben des vorausbezahlten Kontos des Teilnehmers gemäß der Übertragungsanforderungsnachricht (S15) .

3. Verfahren nach Anspruch 1, ferner umfassend: bevor der SCP die erste AC-Nachricht gemäß der Anrufanforderung an die MSC sendet,
Bestimmen, durch den SCP, ob der anrufende Teilnehmer ein Teilnehmer eines vorausbezahlten Dienstes ist, und Bestimmen, ob der angerufene Teilnehmer ein Teilnehmer eines vorausbezahlten Dienstes ist.

4. Verfahren nach Anspruch 1, wobei die erste vorbestimmte Dauer gleich der zweiten vorbestimmten Dauer ist.

5. Dienstkontrollpunkt, SCP, der Folgendes umfasst:
eine Empfangseinheit (41), die dafür konfiguriert ist, eine Übertragungsanforderungsnachricht von einem Teilnehmer zu empfangen;
eine Bestimmungseinheit (42), die für Folgendes konfiguriert ist: nachdem die Übertragungsanforderungsnachricht empfangen wurde, Bestimmen eines Status des Teilnehmers und Erzeugen eines Ergebnisses der Bestimmung; und
eine erste Übertragungseinheit (43), die für Folgendes konfiguriert ist: wenn das Ergebnis der Bestimmung darin besteht, dass sich der Teilnehmer nicht in einem Anruf befindet, Durchführen einer Übertragung auf einem Guthaben eines vorausbezahlten Kontos des Teilnehmers gemäß der Übertragungsanforderungsnachricht; und wenn das Ergebnis der Bestimmung darin besteht, dass sich der Teilnehmer in einem Anruf befindet, Durchführen keiner Übertragung;
**dadurch gekennzeichnet, dass** die Bestimmungseinheit (41) Folgendes umfasst:
eine erste Erfassungsuntereinheit, die für Folgendes konfiguriert ist: nachdem die Übertragungsanforderungsnachricht empfangen wurde, Erfassen einer ersten aktuellen Zeit;
eine zweite Erfassungsuntereinheit, die für Folgendes konfiguriert ist: Erfassen einer Aufzeichnungszeit, die dem Teilnehmer entspricht, wobei die Aufzeichnungszeit eine Zeit ist, zu der der Teilnehmer einen letzten Anruf abschließt, oder eine Zeit, zu der ein nächstes Laden auf dem vorausbezahlten Konto des Teilnehmers durchgeführt wird; und
eine Vergleichsuntereinheit, die für Folgendes konfiguriert ist: Vergleichen der ersten aktuellen Zeit mit der Aufzeichnungszeit, die dem Teilnehmer entspricht, und Erzeugen eines Ergebnisses der Bestimmung, wobei wenn die erste aktuelle Zeit früher als die Aufzeichnungszeit ist, ist das erzeugte Ergebnis der Bestimmung, dass sich der Teilnehmer in einem Anruf befindet, und wenn die erste aktuelle Zeit nicht früher als die Aufzeichnungszeit ist, ist das erzeugte Ergebnis der Bestimmung, dass sich der Teilnehmer nicht in einem Anruf befindet;
wobei der Teilnehmer ein anrufender Teilnehmer oder ein angerufener Teilnehmer ist; und
die zweite Erfassungsuntereinheit Folgendes umfasst:
ein Empfangsmodul, das dafür konfiguriert ist, eine Anrufanforderung eines anrufenden Teilnehmers zum Anrufen eines angerufenen Teilnehmers zu empfangen;
ein Sendemodul, das für Folgendes konfiguriert ist: Senden einer ersten Ladevorgang-Ausführen-, AC, Nachricht an ein Mobilvermittlungszentrum, MSC, gemäß der Anrufanforderung, und Erfassen einer zweiten aktuellen Zeit;
ein Erzeugungsmodul, das für Folgendes konfiguriert ist: Erzeugen der Aufzeichnungszeit durch Hinzufügen einer ersten vorbestimmten Dauer zu der zweiten aktuellen Zeit;
ein Bestimmungsmodul, das dafür konfiguriert ist, zu bestimmen, ob der Anruf noch in Bearbeitung ist;
ein erstes Aktualisierungsmodul, das für Folgendes konfiguriert ist: wenn das Bestimmungsmodul feststellt, dass der Anruf noch Bearbeitung ist, Senden, durch den SCP, einer zweiten AC-Nachricht zu dem MSC, wenn eine zweite vorbestimmte Dauer ab dem Zeitpunkt abläuft, zu dem die erste AC-Nachricht gesendet wird, und Erfassen einer dritten aktuellen Zeit; und Aktualisieren der Aufzeichnungszeit mit einer Summe der dritten aktuellen Zeit und der ersten vorbestimmten Dauer; und
ein zweites Aktualisierungsmodul, das für Folgendes konfiguriert ist: wenn das Bestimmungsmodul feststellt, dass der Anruf beendet ist, Aktualisieren der Aufnahmezeit mit einer Uhrzeit, zu der der Anruf abgeschlossen ist.

6. SCP nach Anspruch 5, der ferner Folgendes umfasst:
eine Speichereinheit (44), die dafür konfiguriert ist, die Übertragungsanforderungsnachricht zu speichern; und
eine zweite Übertragungseinheit (45), die für Folgendes konfiguriert ist: nachdem der Anruf abgeschlossen ist, Durchführen einer Übertragung auf dem Guthaben des vorausbezahlten Kontos des Teilnehmers gemäß der Übertragungsanforderungsnachricht.

## Revendications

1. Procédé destiné à piloter un transfert d'un abonné, comprenant les opérations consistant à :
faire recevoir, par un point de commande de service, SCP, un message de requête de transfert en provenance d'un abonné (S11) ;
après que le message de requête de transfert est reçu par le SCP, faire déterminer, par le SCP, un statut de l'abonné, et générer un résultat de la détermination (S12) ;
lorsque le résultat de la détermination est que l'abonné est dans un appel, ne faire effectuer aucun transfert par le SCP ; et
lorsque le résultat de la détermination est que l'abonné n'est pas dans un appel, faire effectuer par le SCP un transfert sur un solde d'un compte à pré-paiement de l'abonné conformément au message de requête de transfert (S13) ;
**caractérisé en ce que** : la détermination, par le SCP, d'un statut de l'abonné et la génération d'un résultat de la détermination après que le message de requête de transfert est reçu par le SCP comprennent :
après que le message de requête de transfert est reçu par le SCP, faire acquérir, par le SCP, un premier horaire actuel (S22) ;
faire acquérir, par le SCP, un horaire d'enregistrement correspondant à l'abonné (S23), cas dans lequel l'horaire d'enregistrement est un horaire lorsque l'abonné termine un dernier appel ou un horaire lorsqu'une prochaine taxation est effectuée sur le compte à pré-paiement de l'abonné ; et
faire comparer, par le SCP, le premier horaire actuel avec l'horaire d'enregistrement correspondant à l'abonné, et générer un résultat de la détermination (S24), cas dans lequel
lorsque le premier horaire actuel est antérieur à l'horaire d'enregistrement, le résultat généré de la détermination est que l'abonné est dans un appel (S26 et S27) ; et lorsque le premier horaire actuel n'est pas antérieur à l'horaire d'enregistrement, le résultat généré de la détermination est que l'abonné n'est pas dans un appel (S25) ;
cas dans lequel l'abonné est un abonné appelant ou un abonné appelé ; et
l'horaire d'enregistrement est généré conformément aux étapes consistant à :
faire recevoir, par le SCP, une requête d'appel d'un abonné appelant pour appeler un abonné appelé (S231) ;
faire envoyer, par le SCP, un premier message d'application de taxation (Apply Charging), AC, à un centre de commutation mobile, MSC, conformément à la requête d'appel, et acquérir un deuxième horaire actuel (S232) ;
faire générer, par le SCP, l'horaire d'enregistrement en ajoutant une première durée prédéterminée au deuxième horaire actuel (S233) ;
faire déterminer, par le SCP, si l'appel est toujours en cours (S234) ;
lorsqu'il est déterminé que l'appel a pris fin, faire mettre à jour, par le SCP, l'horaire d'enregistrement avec un horaire auquel l'appel a pris fin (S236) ;
lorsqu'il est déterminé que l'appel est toujours en cours, faire envoyer, par le SCP, un deuxième message AC au MSC lorsqu'une deuxième durée prédéterminée expire à partir du moment où le premier message AC est envoyé, et acquérir un troisième horaire actuel ; et mettre à jour l'horaire d'enregistrement grâce à la somme du troisième horaire actuel et de la première durée prédéterminée (S235) ; et
faire utiliser, par le SCP, l'horaire d'enregistrement en tant qu'horaire d'enregistrement de l'abonné appelant ou en tant qu'horaire d'enregistrement de l'abonné appelé respectivement.

2. Procédé selon la revendication 1, comprenant en outre : pendant que le SCP n'effectue aucun transfert ;
stocker le message de requête de transfert (S14) ; et après que l'appel a pris fin, effectuer un transfert sur le solde du compte à pré-paiement de l'abonné conformément au message de requête de transfert (S15).

3. Procédé selon la revendication 1, comprenant en outre : avant que le SCP n'envoie le premier message AC au MSC conformément à la requête d'appel,
faire déterminer, par le SCP, si l'abonné appelant est un abonné avec un service à pré-paiement, et déterminer si l'abonné appelé est un abonné avec un service à pré-paiement.

4. Procédé selon la revendication 1, la première durée prédéterminée étant égale à la deuxième durée prédéterminée.

5. Point de commande de service, SCP, comprenant :
une unité de réception (41) configurée de façon à recevoir un message de requête de transfert en provenance d'un abonné ;
une unité de détermination (42) configurée de façon à : après que le message de requête de transfert est reçu, déterminer un statut de l'abonné, et générer un résultat de la détermination ; et
une première unité de transfert (43) configurée de façon à : lorsque le résultat de la détermination est que l'abonné n'est pas dans un appel, effectuer un transfert sur un solde d'un compte à pré-paiement de l'abonné conformément au message de requête de transfert ; et lorsque le résultat de la détermination est que l'abonné est dans un appel, n'effectuer aucun transfert ;
**caractérisé en ce que** l'unité de détermination (41) comprend :
une première sous-unité d'acquisition configurée de façon à : après que le message de requête de transfert est reçu, acquérir un premier horaire actuel ;
une deuxième sous-unité d'acquisition configurée de façon à : acquérir un horaire d'enregistrement correspondant à l'abonné, cas dans lequel l'horaire d'enregistrement est un horaire lorsque l'abonné termine un dernier appel ou un horaire lorsqu'une prochaine taxation est effectuée sur le compte à pré-paiement de l'abonné ; et
une sous-unité de comparaison configurée de façon à : comparer le premier horaire actuel avec l'horaire d'enregistrement correspondant à l'abonné, et générer un résultat de la détermination, cas dans lequel lorsque le premier horaire actuel est antérieur à l'horaire d'enregistrement, le résultat généré de la détermination est que l'abonné est dans un appel, et lorsque le premier horaire actuel n'est pas antérieur à l'horaire d'enregistrement, le résultat généré de la détermination est que l'abonné n'est pas dans un appel ;
cas dans lequel l'abonné est un abonné appelant ou un abonné appelé ; et
la deuxième sous-unité d'acquisition comprend :
un module de réception configuré de façon à recevoir une requête d'appel d'un abonné appelant pour appeler un abonné appelé ;
un module d'envoi configuré de façon à : envoyer un premier message d'application de taxation (Apply Charging), AC, à un centre de commutation mobile, MSC, conformément à la requête d'appel, et acquérir un deuxième horaire actuel ;
un module de génération configuré de façon à : générer l'horaire d'enregistrement en ajoutant une première durée prédéterminée au deuxième horaire actuel ;
un module de détermination configuré de façon à déterminer si l'appel est toujours en cours ;
un premier module de mise à jour configuré de façon à : lorsque le module de détermination détermine que l'appel est toujours en cours, envoyer un deuxième message AC au MSC lorsqu'une deuxième durée prédéterminée expire à partir du moment où le premier message AC est envoyé, et acquérir un troisième horaire actuel ; et mettre à jour l'horaire d'enregistrement grâce à la somme du troisième horaire actuel et de la première durée prédéterminée ; et
un deuxième module de mise à jour configuré de façon à : lorsque le module de détermination détermine que l'appel a pris fin, mettre à jour l'horaire d'enregistrement avec un horaire auquel l'appel a pris fin.

6. SCP selon la revendication 5, comprenant en outre :
une unité de stockage (44) configurée de façon à stocker un message de requête de transfert ; et
une deuxième unité de transfert (45) configurée de façon à : après que l'appel a pris fin, effectuer un transfert sur le solde du compte à pré-paiement de l'abonné conformément au message de requête de transfert.
